# EUROPÄISCHE PATENTANMELDUNG

(11) **EP 3 699 028 A1**
(43) Veröffentlichungstag der Anmeldung: **26.08.2020**
(21) Anmeldenummer: 19158454.9
(22) Anmeldetag: 21.02.2019
(51) Int. Cl.: B60Q 1/076

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Stadler, Peter, 3654 Raxendorf (AT); Aichinger, Tobias, 3243 St. Leonhard am Forst (AT); Gottsmann, Michael, 3652 Leiben (AT); Pflügl, Hubert, 3270 Scheibbs (AT); Gutmensch, Maximilian, 3254 Bergland (AT)
(74) Vertreter: Patentanwaltskanzlei Matschnig & Forsthuber OG

(57) **Zusammenfassung**

Beleuchtungsvorrichtung (100) für einen Kraftfahrzeugscheinwerfer, welche Beleuchtungsvorrichtung Folgendes umfasst:
- eine erste optische Baueinheit (100), welche um eine erste Verschwenkachse (Y1) verschwenkbar gelagert ist,
- eine zweite optische Baueinheit (200), welche um eine zweite Verschwenkachse (Y2) verschwenkbar gelagert ist, wobei die erste und die zweite Verschwenkachse (Y1, Y2) parallel zueinander verlaufen, und
- zumindest eine Einstelleinrichtung zum gleichzeitigen Verschwenken der e optischen Baueinheiten (100, 200) um deren Verschwenkachsen (Y1, Y2), welche Einstelleinrichtung ein Kopplungselement (310) und eine Antriebseinrichtung (320) mit einem in eine Verschubachse (X1) linear verstellbaren Stellarm (321) umfasst, wobei die Verschubachse (X1) orthogonal zu den Verschwenkachsen (Y1, Y2) ist, und wobei das Kopplungselement (310) über eine erste Verbindungsstelle (311) gelenkig mit der ersten Baueinheit (100) und über eine zweite Verbindungsstelle (312) gelenkig mit der zweiten Baueinheit (200) verbunden ist, und wobei der Stellarm (321) mit dem Kopplungselement (310) an einer dritten Verbindungsstelle (313) beweglich verbunden ist und das Kopplungselement in Richtung der Verschubachse (X1) antreibt, wobei die erste Verschwenkachse (Y1) in einer Horizontalebene (H) liegt und der Normalabstand der ersten Verbindungsstelle (311) zu dieser Horizontalebene (H) von dem Normalabstand der dritten Verbindungsstelle (313) zur Horizontalebene (H) verschieden ist.

## Beschreibung

Die Erfindung betrifft eine Beleuchtungsvorrichtung für einen Kraftfahrzeugscheinwerfer, welche Beleuchtungsvorrichtung Folgendes umfasst:
- eine erste optische Baueinheit, welche um eine erste Verschwenkachse verschwenkbar gelagert ist,
- eine zweite optische Baueinheit, welche um eine zweite Verschwenkachse verschwenkbar gelagert ist, wobei die erste und die zweite Verschwenkachse parallel zueinander verlaufen, und
- zumindest eine Einstelleinrichtung zum gleichzeitigen Verschwenken der ersten und der zweiten optischen Baueinheit um deren Verschwenkachsen, welche Einstelleinrichtung ein Kopplungselement und eine Antriebseinrichtung mit einem in eine Verschubachse linear verstellbaren Stellarm umfasst, wobei die Verschubachse orthogonal zur ersten und zweiten Verschwenkachse ist, und wobei das Kopplungselement über eine erste Verbindungsstelle gelenkig mit der ersten optischen Baueinheit und über eine zweite Verbindungsstelle gelenkig mit der zweiten optischen Baueinheit verbunden ist, und wobei der Stellarm der Antriebseinrichtung mit dem Kopplungselement an einer dritten Verbindungsstelle beweglich verbunden ist und das Kopplungselement in Richtung der Verschubachse antreibt.

Weiters betrifft die Erfindung einen Kraftfahrzeugscheinwerfer mit zumindest einer erfindungsgemäßen Beleuchtungsvorrichtung.

In Kraftfahrzeugscheinwerfern sind meistens verschiedene Lichtfunktionen auf beispielsweise verschiedenen Tragerahmen angeordnet, da der meist vorgegebene Bauraum durch entsprechende Scheinwerferdesigns vorgegeben ist. Bei einer Leuchtweitenregelung wird üblicherweise angestrebt, dass sich beide Tragerahmen bzw. die unterschiedlichen optischen Baueinheiten gemeinsam bewegen bzw. verschwenken, wobei die optischen Baueinheiten mittels einem Kopplungselements miteinander mechanisch verbunden sind. Bei einer solchen Verstellung mittels der oben genannten Koppelung wird eine möglichst leichtgängige Verstellmechanik angestrebt, welche auch anfallende Vibrationen aushalten und nicht verkippen sollte.

Um diese Anforderungen erfüllen zu können, ist unter anderem der Einstellhebel, also der Abstand zwischen der Verschwenkachse und dem entsprechenden Angriffspunkt zur Verschwenkung der optischen Baueinheit, so groß wie möglich zu gestalten, was jedoch aufgrund des oben bereits erwähnten vorgegebenen Bauraums bzw. des Scheinwerferdesigns nicht immer möglich ist, sodass Kompromisse eingegangen werden müssen.

Es ist eine Aufgabe der Erfindung, eine verbesserte Beleuchtungsvorrichtung für einen Kraftfahrzeugscheinwerfer bereitzustellen.

Diese Aufgabe wird dadurch gelöst, dass die erste Verschwenkachse in einer Horizontalebene liegt und der Normalabstand der ersten Verbindungsstelle zu dieser Horizontalebene von dem Normalabstand der dritten Verbindungsstelle zur Horizontalebene verschieden ist.

Dadurch kann der Bauraumbedarf gegenüber bisher bekannten Lösungen verringert werden bzw. variabler gestaltet werden. Dies ist insbesondere bei aktuellen Scheinwerfern von Vorteil, da durch immer höhere Anforderungen von Seiten des Fahrzeugdesigns, umgebender Technik und Funktionen sowie zusätzlicher Technik im Scheinwerfer der vorhandene Bauraum immer besser genutzt werden muss.

Auf Führungen im Gehäuse, wie sie bei bekannten Lösungen für das Kopplungselement teilweise notwendig sind, kann bei der erfindungsgemäßen Lösung verzichtet werden. Somit verringert sich auch der Aufwand bei der genauen Bauteil- und Materialabstimmung und damit einhergehende Probleme können vermieden werden.

Vorzugsweise ist die Antriebseinrichtung dazu eingerichtet, das längliche Kopplungselement in Richtung seiner Längserstreckung linear hin- und her zu bewegen bzw. zu verschieben. Diese Verschiebebewegung wird, da das Kopplungselement außerhalb der beiden im Wesentlichen zueinander parallelen ersten und zweiten Verschwenkachsen der optischen Baueinheiten liegt, in eine Verschwenkbewegung der beiden optischen Baueinheiten um deren Verschwenkachsen umgesetzt. Das Kopplungselement erfährt dabei eine, wenn auch in der Regel geringe Verschiebung normal zu seiner Längserstreckung, da die Verbindungsstellen der optischen Baueinheiten mit dem Kopplungselement einen Kreisbogen um die Verschwenkachsen der optischen Baueinheiten beschreiben.

Damit eine entsprechende Relativbewegung des Kopplungselementes zu der zumindest einen Antriebseinrichtung möglich ist, kann daher mit Vorteil vorgesehen sein, dass die zumindest eine Antriebseinrichtung über eine Antriebseinrichtungs-Verbindungsstelle beweglich mit dem Kopplungselement verbunden ist.

Bei einer konkreten Realisierung der Erfindung kann vorgesehen sein, dass die beiden im Wesentlichen zueinander parallelen Achsen Horizontalachsen sind, welche vorzugsweise im Wesentlichen normal auf die optischen Achsen der optischen Baueinheiten stehen.

Um diese Horizontalachsen können die optischen Baueinheiten auf und ab verschwenkt werden und so die Leuchtweite des jeweils mit der optischen Baueinheit erzeugten Lichtbündels eingestellt werden.

Es sei angemerkt, dass sich Begriffe wie "horizontal", "vertikal", "oben" oder "unten" auf eine in einen Kraftfahrzeugscheinwerfer korrekt eingebaute Beleuchtungseinrichtung beziehen, welcher Kraftfahrzeugscheinwerfer sich in Einbaulage in einem Kraftfahrzeug befindet.

Um den weiter oben beschriebenen Versatz des länglichen Kopplungselementes (in Folge der Kreisbewegung der Verbindungsstellen) zu ermöglichen, sind die Verbindungsstellen derart ausgebildet, dass das Kopplungselement in Bezug auf die der Verbindungsstelle zugeordnete optische Baueinheit und des Stellarms um eine Achse, welche parallel zu der Verschwenkachse der optischen Baueinheit verläuft, verschwenkbar ist.

Grundsätzlich kann die Antriebseinrichtung zum gleichzeitigen Verschwenken der beiden optischen Baueinheiten um ihre parallelen Achsen eine manuell zu bedienende Antriebseinrichtung sein. Für eine automatische Einstellung kann es aber von Vorteil sein, wenn die Antriebsvorrichtung ein Linearantrieb, insbesondere ein Linearmotor, vorzugsweise ein elektrischer Linearmotor, ist.

In einer zweckmäßigen Ausführungsform der Erfindung kann vorgesehen sein, dass der Normalabstand der dritten Verbindungsstelle zur Horizontalebene kleiner ist als der Normalabstand der ersten Verbindungsstelle zur Horizontalebene.

Es kann vorgesehen sein, dass die Verschubachse parallel zur Horizontalebene ist.

Es kann günstig sein, wenn das Kopplungselement als längliches Kopplungselement ausgebildet ist, wobei vorzugsweise die Längsachse des Kopplungselements parallel zur Verschubachse ist.

Es kann ferner vorgesehen sein, dass das Kopplungselement starr ausgebildet ist.

Es kann vorgesehen sein, dass die dritte Verbindungsstelle, welche den Stellarm der Antriebseinrichtung mit dem Kopplungselement verbindet, an einem Ende des Kopplungselements angeordnet ist.

Ferner kann vorgesehen sein, dass die erste oder die zweite Verbindungsstelle an einem Ende des Kopplungselements, insbesondere an dem der dritten Verbindungsstelle gegenüberliegenden Ende des Kopplungselements angeordnet ist.

Vorteilhafterweise kann der Normalabstand der ersten Verbindungsstelle zu der ersten Verschwenkachse der ersten optischen Baueinheit identisch zum Normalabstand der zweiten Verbindungsstelle zu der zweiten Verschwenkachse der zweiten optischen Baueinheit sein.

Dadurch werden beide optischen Baueinheiten beim Verschwenken um ihre parallelen Verschwenkachsen um den gleichen Winkelbetrag verschwenkt.

Es kann vorgesehen sein, dass die erste und/oder die zweite Verbindungsstelle als Kugelgelenk bzw. kugelgelenksartig ausgebildet ist.

Es kann vorgesehen sein, dass die erste und die zweite Verschwenkachse in einer gemeinsamen Horizontalebene liegen.

Überdies kann vorgesehen sein, dass die optischen Baueinheiten Linsen, Reflektoren oder Lichtmodule sind.

Es kann vorgesehen sein, dass die optischen Baueinheiten jeweils einen Tragerahmen aufweisen, an welchem die entsprechenden Verbindungsstellen angeordnet sind.

Es kann überdies vorgesehen sein, dass eine und/oder beide optischen Baueinheiten mehrere Lichtmodule umfassen, welche je optischer Baueinheit auf einem Tragerahmen angeordnet sind.

Mit Vorteil kann vorgesehen sein, wenn die dritte Verbindungsstelle ein zumindest teilweises vertikales Verschieben des Kopplungselements an dem Stellarm zulässt.

Die Aufgabe wird auch erfindungsgemäß mit einem Kraftfahrzeugscheinwerfer, welcher zumindest eine erfindungsgemäße Beleuchtungseinrichtung umfasst, gelöst.

Nachfolgend wird die Erfindung anhand von beispielhaften Zeichnungen näher erläutert. Hierbei zeigt
Fig. 1 eine beispielhafte Beleuchtungsvorrichtung in einem Kraftfahrzeugscheinwerfergehäuse in einer perspektivischen Ansicht,
Fig. 2 die Beleuchtungsvorrichtung aus Fig. 1 in einer Seitenansicht.

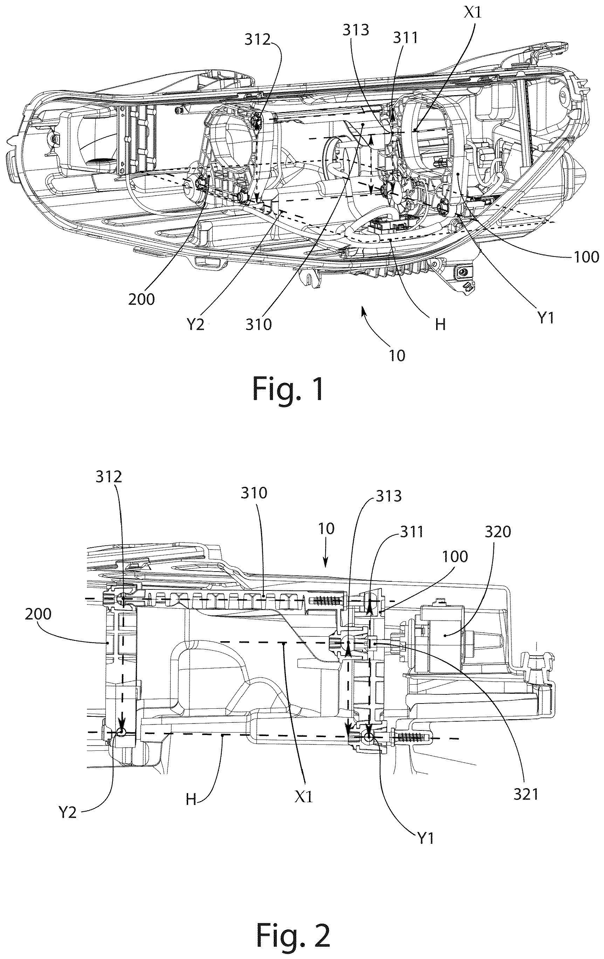

**Fig. 1** zeigt eine beispielhafte Beleuchtungsvorrichtung **10** für einen Kraftfahrzeugscheinwerfer, welche Beleuchtungsvorrichtung **10** eine erste optische Baueinheit **100,** welche um eine erste Verschwenkachse **Y1** verschwenkbar gelagert ist, und eine zweite optische Baueinheit **200,** welche um eine zweite Verschwenkachse **Y2** verschwenkbar gelagert ist, wobei die erste und die zweite Verschwenkachse **Y1**, **Y2** parallel zueinander verlaufen.

Die optischen Baueinheiten **100, 200** können beispielsweise Linsen, Reflektoren oder ganze Lichtmodule sein, wobei die optischen Baueinheiten **100, 200** jeweils einen Tragerahmen aufweisen, an welchem die Lichtmodule angeordnet bzw. befestigt sind. In dem in den Figuren gezeigten Beispiel sind aus Gründen der Übersichtlichkeit lediglich die Tragerahmen der optischen Baueinheiten **100, 200** gezeigt, wobei nachfolgend weiterhin der Terminus "optische Baueinheiten" verwendet wird.

Ferner umfasst die Beleuchtungsvorrichtung **10** eine Einstelleinrichtung zum gleichzeitigen Verschwenken der ersten und der zweiten optischen Baueinheit **100, 200** um deren Verschwenkachsen **Y1**, **Y2,** welche Einstelleinrichtung ein Kopplungselement **310** und eine Antriebseinrichtung **320** mit einem in eine Verschubachse **X1** linear verstellbaren Stellarm **321** aufweist.

Die Verschubachse **X1** ist dabei orthogonal zur ersten und zweiten Verschwenkachse **Y1**, **Y2** angeordnet, wobei das Kopplungselement **310** über eine erste Verbindungsstelle **311** gelenkig mit der ersten optischen Baueinheit **100** und über eine zweite Verbindungsstelle **312** gelenkig mit der zweiten optischen Baueinheit **200** verbunden ist, und wobei der Stellarm **321** der Antriebseinrichtung **320** mit dem Kopplungselement **310** an einer dritten Verbindungsstelle **313** beweglich verbunden ist und das Kopplungselement **310** in Richtung der Verschubachse **X1** antreibt.

Die erste und die zweite Verbindungsstelle **311, 312** sind jeweils an entgegengesetzten Enden des Kopplungselements **310** angeordnet, wobei die dritte Verbindungsstelle **313,** welche den Stellarm **312** der Antriebseinrichtung **320** mit dem Kopplungselement **310** verbindet, an dem Ende angeordnet ist, an welchem die erste Verbindungsstelle **311** angeordnet ist, wobei die Verbindungsstellen **311, 312, 313** jeweils kugelgelenksartig ausgeführt sind.

Das Kopplungselement **310** ist hierbei länglich und als starrer Körper ausgebildet, wobei die Längsachse des Kopplungselements **310** parallel zur Verschubachse **X1** angeordnet ist.

Wie in **Fig. 1** und auch **Fig. 2** zu sehen ist, liegt die erste Verschwenkachse **Y1** in einer gedachten Horizontalebene **H,** wobei der Normalabstand der dritten Verbindungsstelle **313** zu dieser Horizontalebene **H** kleiner ist als der Normalabstand der ersten Verbindungsstelle **311** zur Horizontalebene **H.** Weiters ist die Verschubachse **X1** parallel zur Horizontalebene **H.**

In **Fig. 2** ist weiters zu sehen, dass der Normalabstand der ersten Verbindungsstelle **311** zu der ersten Verschwenkachse **Y1** der ersten optischen Baueinheit **100** identisch zum Normalabstand der zweiten Verbindungsstelle **312** zu der zweiten Verschwenkachse **Y2** der zweiten optischen Baueinheit **200** ist. Weiters liegen die erste und die zweite Verschwenkachse **Y1**, **Y2** in dem gezeigten Beispiel in einer gemeinsamen Horizontalebene **H.**

**Fig. 2** zeigt ferner eine Ausgangslage der optischen Baueinheiten **100, 200,** wobei die Antriebseinrichtung **320** dazu eingerichtet, das längliche Kopplungselement **310** in Richtung seiner Längserstreckung bzw. in Richtung der Verschubachse **X1** linear hin- und her zu bewegen bzw. zu verschieben. Diese Verschiebebewegung wird, da das Kopplungselement **310** zwischen den beiden zueinander parallelen ersten und zweiten Verschwenkachsen **Y1**, **Y2** der optischen Baueinheiten **100, 200** liegt, in eine Verschwenkbewegung der beiden optischen Baueinheiten um deren Verschwenkachsen **Y1**, **Y2** umgesetzt. Das Kopplungselement **310** erfährt dabei selbst eine, wenn auch in der Regel geringe Verschiebung normal zu seiner Längserstreckung, da die Verbindungsstellen **311, 312** der optischen Baueinheiten **100, 200** mit dem Kopplungselement **310** einen Kreisbogen um die Verschwenkachsen **Y1**, **Y2** der optischen Baueinheiten **100, 200** beschreiben.

Damit eine entsprechende Relativbewegung des Kopplungselementes **310** zu der zumindest einen Antriebseinrichtung **320,** welche Antriebseinrichtung bzw. der Stellarm derart befestigt ist, dass eine vertikale Bewegung nicht ausgeführt werden kann, möglich ist, ist die dritte Verbindungsstelle **313** so eingerichtet, dass ein zumindest teilweises vertikales Verschieben des Kopplungselements **310** an dem Stellarm **321** möglich ist.

Ferner ist in **Fig. 2** zu sehen, dass das Kopplungselement **310** zur Verbindung mit der ersten optischen Baueinheit **100** bzw. mit dem Tragerahmen der ersten optischen Baueinheit **100** an der ersten Verbindungsstelle **311** eine Einstellschraube aufweist, welche kugelgelenksartig mit dem Tragerahmen verbunden ist. Diese Einstellschraube ist mit einem Gewinde in das Kopplungselement **310** eingeschraubt, wobei mittels der Einstellschraube manuell eine Feinjustierung vorgenommen werden kann, um die Ausrichtung bzw. die Winkelauslenkung der jeweiligen Tragerahmen zur Horizontalebene **H** genau einzustellen.

Es kann auch vorgesehen sein, dass auch andere Verbindungsstellen **311, 313** mittels einer Einstellschraube realisiert werden, mit welcher Feineinstellungen vorgenommen werden können.

**BEZUGSZEICHENLISTE**

| | |
|---|---|
| Beleuchtungsvorrichtung | 10 |
| Erste optische Baueinheit | 100 |
| Zweite optische Baueinheit | 200 |
| Kopplungselement | 310 |
| Erste Verbindungsstelle | 311 |
| Zweite Verbindungsstelle | 312 |
| Dritte Verbindungsstelle | 313 |
| Antriebseinrichtung | 320 |
| Stellarm | 321 |
| Horizontalebene | H |
| Erste Verschwenkachse | Y1 |
| Zweite Verschwenkachse | Y2 |
| Verschubachse | X1 |

## Patentansprüche

1. Beleuchtungsvorrichtung (10) für einen Kraftfahrzeugscheinwerfer, welche Beleuchtungsvorrichtung Folgendes umfasst:
- eine erste optische Baueinheit (100), welche um eine erste Verschwenkachse (Y1) verschwenkbar gelagert ist,
- eine zweite optische Baueinheit (200), welche um eine zweite Verschwenkachse (Y2) verschwenkbar gelagert ist, wobei die erste und die zweite Verschwenkachse (Y1, Y2) parallel zueinander verlaufen, und
- zumindest eine Einstelleinrichtung zum gleichzeitigen Verschwenken der ersten und der zweiten optischen Baueinheit (100, 200) um deren Verschwenkachsen (Y1, Y2), welche Einstelleinrichtung ein Kopplungselement (310) und eine Antriebseinrichtung (320) mit einem in eine Verschubachse (X1) linear verstellbaren Stellarm (321) umfasst, wobei die Verschubachse (X1) orthogonal zur ersten und zweiten Verschwenkachse (Y1, Y2) ist, und wobei das Kopplungselement (310) über eine erste Verbindungsstelle (311) gelenkig mit der ersten optischen Baueinheit (100) und über eine zweite Verbindungsstelle (312) gelenkig mit der zweiten optischen Baueinheit (200) verbunden ist, und wobei der Stellarm (321) der Antriebseinrichtung (320) mit dem Kopplungselement (310) an einer dritten Verbindungsstelle (313) beweglich verbunden ist und das Kopplungselement in Richtung der Verschubachse (X1) antreibt,
**dadurch gekennzeichnet, dass**
die erste Verschwenkachse (Y1) in einer Horizontalebene (H) liegt und der Normalabstand der ersten Verbindungsstelle (311) zu dieser Horizontalebene (H) von dem Normalabstand der dritten Verbindungsstelle (313) zur Horizontalebene (H) verschieden ist.

2. Beleuchtungsvorrichtung nach Anspruch 1, **dadurch gekennzeichnet, dass** der Normalabstand der dritten Verbindungsstelle (313) zur Horizontalebene (H) kleiner ist als der Normalabstand der ersten Verbindungsstelle (311) zur Horizontalebene (H).

3. Beleuchtungsvorrichtung nach Anspruch 1 oder 2, **dadurch gekennzeichnet, dass** die Verschubachse (X1) parallel zur Horizontalebene (H) ist.

4. Beleuchtungsvorrichtung nach einem der Ansprüche 1 bis 3, **dadurch gekennzeichnet, dass** das Kopplungselement (310) als längliches Kopplungselement (310) ausgebildet ist, wobei vorzugsweise die Längsachse des Kopplungselements (310) parallel zur Verschubachse (X1) ist.

5. Beleuchtungsvorrichtung nach einem der Ansprüche 1 bis 4, **dadurch gekennzeichnet, dass** das Kopplungselement (310) starr ausgebildet ist.

6. Beleuchtungsvorrichtung nach einem der Ansprüche 1 bis 5, **dadurch gekennzeichnet, dass** die dritte Verbindungsstelle (313), welche den Stellarm (321) der Antriebseinrichtung (320) mit dem Kopplungselement (310) verbindet, an einem Ende des Kopplungselements (310) angeordnet ist.

7. Beleuchtungsvorrichtung nach einem der Ansprüche 1 bis 6, **dadurch gekennzeichnet, dass** die erste oder die zweite Verbindungsstelle (311, 312) an einem Ende des Kopplungselements (310), insbesondere an dem der dritten Verbindungsstelle (313) gegenüberliegenden Ende des Kopplungselements (310) angeordnet ist.

8. Beleuchtungsvorrichtung nach einem der Ansprüche 1 bis 7, **dadurch gekennzeichnet, dass** der Normalabstand der ersten Verbindungsstelle (311) zu der ersten Verschwenkachse (Y1) der ersten optischen Baueinheit (100) identisch zum Normalabstand der zweiten Verbindungsstelle (312) zu der zweiten Verschwenkachse (Y2) der zweiten optischen Baueinheit (200) ist.

9. Beleuchtungsvorrichtung nach einem der Ansprüche 1 bis 8, **dadurch gekennzeichnet, dass** die erste und/oder die zweite Verbindungsstelle (311, 312) als Kugelgelenk bzw. kugelgelenksartig ausgebildet ist.

10. Beleuchtungsvorrichtung nach einem der Ansprüche 1 bis 9, **dadurch gekennzeichnet, dass** die erste und die zweite Verschwenkachse (Y1, Y2) in einer gemeinsamen Horizontalebene liegen.

11. Beleuchtungsvorrichtung nach einem der Ansprüche 1 bis 10, **dadurch gekennzeichnet, dass** die optischen Baueinheiten (100, 200) Linsen, Reflektoren oder Lichtmodule sind.

12. Beleuchtungsvorrichtung nach einem der Ansprüche 1 bis 10, **dadurch gekennzeichnet, dass** die optischen Baueinheiten (100, 200) jeweils einen Tragerahmen aufweisen, an welchem die entsprechenden Verbindungsstellen (311, 312, 313) angeordnet sind.

13. Beleuchtungsvorrichtung nach einem der Ansprüche 1 bis 12, **dadurch gekennzeichnet, dass** die dritte Verbindungsstelle (313) ein zumindest teilweises vertikales Verschieben des Kopplungselements (310) an dem Stellarm (321) zulässt.

14. Kraftfahrzeugscheinwerfer mit zumindest einer Beleuchtungseinrichtung gemäß einem der Ansprüche 1 bis 13.
